# EUROPEAN PATENT APPLICATION

(11) **EP 0 905 219 A1**
(43) Date of publication of application: **31.03.1999**
(21) Application number: 98902194.4
(22) Date of filing: 12.02.1998
(51) Int. Cl.: C10M 105/00, C10M 169/04, C09K 5/04, C10N 20/02

(54) **LUBRICATING OIL FOR COMPRESSION REFRIGERATORS, WORKING FLUID FOR REFRIGERATORS, AND METHOD FOR LUBRICATING REFRIGERATION SYSTEM**

(30) Priority: 13.02.1997 JP 42892/97; 26.02.1997 JP 57097/97
(71) Applicant: JAPAN ENERGY CORPORATION, Tokyo 105-0001 (JP)
(72) Inventor: KAIMAI, Takashi, Japan Energy Corporation, Toda-shi Saitama 335-0026 (JP); TAKAHASHI, Hitoshi, Japan Energy Corporation, Toda-shi Saitama 335-0026 (JP)
(74) Representative: Fiener, Josef
(86) International application number: JP9800560
(87) International publication number: WO9836040

(57) **Abstract**

The present invention is directed to a lubricating oil for a compression refrigerator, the lubricating oil comprising a lube base oil which comprises (a) a polyether in which all the oxygen atoms of a tetrahydric or higher polyhydric alcohol residue are bonded to a plurality of hydrocarbon groups each consisting of a carbon atom being bonded to two alkyl groups having 1 to 8 carbon atoms to form ether bonds at the position of the carbon atom and (b) an alkylaromatic compound having a branched alkyl group having 8 to 20 carbon atoms,
; or comprising the foregoing (a) as a lube base oil and (c) 0.5 to 4.5% by weight of a polyoxyalkylene; a working fluid for a refrigerator comprising the above lubricating oil and an HFC refrigerant; and a method for lubricating a refrigeration system compressing the refrigerant, by using the foregoing lubricating oil.

The lubricating oil of the present invention can prevent the occurrence of deposition within a refrigeration system and is excellent in lubricity, hygroscopicity, electrical properties.

## Description

### TECHNICAL FIELD

The present invention relates to a lubricating oil for a compression refrigeration system (hereinafter also referred to as a "refrigerator oil") for use in a refrigerant compressor for a refrigerator, an air conditioner or the like, particularly to a lubricating oil for a compression refrigerator used together with a hydrofluorocarbon refrigerant, a working fluid for a refrigerator comprising the lubricating oil and a hydrofluorocarbon refrigerant, and a lubricating method using the same.

### BACKGROUND ART

Chlorofluorocarbon (CFC) refrigerants, such as dichlorodifluoromethane (R12), and hydrochlorofluorocarbon (HCFC) refrigerants, such as chlorodifluoromethane (R22), have been widely used in compression refrigeration systems for refrigerators, showcases, room air conditioners, car air conditioners or the like. In recent years, the use of the CFC refrigerants and HCFC refrigerants has been regulated from the viewpoint of environmental problems, and hydrofluorocarbons free from chlorine (HFC: hydrocarbons with at least a part of hydrogen atoms in hydrocarbon molecules substituted with fluorine) have been used as alternative refrigerants.

As such hydrofluorocarbon refrigerants, there have been proposed 1,1,1,2-tetrafluoroethane (R134a), pentafluoroethane (R125), difluoromethane (R32), 1,1,1-trifluoroethane (R143a), and 1,1-difluoroethane (R152a),each consisting of a single compound, and mixed refrigerants, such as R407C (a mixture of R32, R125 and R134a in aweight ratio of 23 : 25 : 52) and R410A (a mixture of R32 and R125 in a weight ratio of 50 : 50).

In the above refrigerants, the conventional lubricating oil based on a mineral oil cannot be used because of lack of compatibility with the refrigerants. Lubricating oils comprising as a base oil PAG compounds, such as polyoxylalkylene glycol (PAG) and its derivatives; polyester compounds; polycarbonic ester compounds; or cyclic polyether compounds derived from polyhydric alcohols, compatible with the HFC refrigerants, have been developed as lubricating oils suitable for use with the foregoing refrigerants (WO 96/06839).

A refrigeration system comprises a refrigerant compressor, a condenser, an expansion mechanism (expansion valve, capillary tube, etc.), and an evaporator, etc. connected to one another in series. Various metal working oils are used for the production of the parts for such equipment and for assembling the system, and these metal working oils remain in the assembled refrigeration system. The metal working oils generally comprise a mineral oil as a base oil and additives, for example, a sulfur extreme pressure agent, such as disulfide, and a phosphorus extreme pressure agent, such as a phosphoric ester.

### DISCLOSURE OF THE INVENTION

The conventional lubricating oil for a refrigerator has the following problems besides the problem regarding to compatibility with the refrigerant. Specifically, the lubricity to the sliding parts of a refrigerant compressor is unsatisfactory, and, hence, the parts of the compressor are likely to be worn. The sealability of the working fluid for a refrigerator in the refrigeration compressor is unsatisfactory. Further, in general, the hygroscopicity of the polyether compound is so high that particular consideration should be taken for assembling and maintenance of the refrigeration system. In addition, the polyether compound has a low electrical insulating property which will further deteriorate by absorbing moisture and thereby result in a large current leakage.

The metal working oil contains a sulfur or phosphorus extreme pressure agent which is generally less likely to be dissolved in an HFC refrigerant. Further, this metal working oil, in some cases, contains a component highly reactive with a lube base oil or an HFC refrigerant. For this reason, a sparingly soluble additive component(s) in a metal working oil, such as a sulfur extreme pressure agent or a phosphorus extreme pressure agent, and a reaction product(s) with a refrigerator oil or the like, in some cases, locally deposit within the refrigeration system. The operation of the refrigeration system causes this deposit to accumulate, especially on the wall of an extremely narrow tube, such as a capillary tube, in the system, resulting in lowered flow rate of the refrigerant and increased differential pressure to deteriorate the efficiency, which often makes it impossible for the refrigeration system to exhibit satisfactory performance. Therefore, as an important problem to be solved, a lubricating oil for a refrigerator is required to have a high contaminant-dissolving performance, thereby eliminating such deposition of contaminants.

However, up to now, there has been no refrigerator oil sufficiently meeting the above-mentioned requirements. Accordingly, an object of the present invention is to solve the above problems, more specifically, a lubricating oil for a refrigerator, having excellent properties, particularly with regard to a) lubricity, b) sealability, c) contaminant dissolving performance, d) hygroscopicity, and e) electric characteristics. Especially, an object of the present invention is to provide a lubricating oil for a compression refrigerator in which the creation of deposits attributable to the residual metal working oil in the system, particularly in a capillary section, can be inhibited by using a particular polyether compound derived from a polyhydric alcohol and having better electrical properties as a base oil. Another object of the present invention is to provide a working fluid for a refrigerator comprising the above lubricating oil and a hydrofluorocarbon refrigerant and a method for lubricating a refrigeration system by using such a working fluid for a refrigerator.

In order to solve the foregoing problems, the present inventors made intensive studies or various lube base oils and additives and arrived at the present invention. Namely, the present invention is to provide a lubricating oil for a compression refrigerator which comprises a lube base oil comprising:
(a) a polyether compound containing a tetrahydric or higher polyhydric alcohol residue and a plurality of hydrocarbon groups each consisting of a carbon atom having two alkyl groups which have 1 to 8 carbon atoms, all the oxygen atoms in the polyhydric alcohol residue being bonded to the hydrocarbon groups to form ether bonds; and
(b) an alkylaromatic compound having a branched alkyl group having 8 to 20 carbon atoms, the kinematic viscosity of the lubricating oil being 8 to 150 mm²/s at 40 °C.
   The present invention provides a further lubricating oil for a compression refrigerator which comprises:
   the foregoing polyether compound (a) as a lube base oil; and
(c) 0.5 to 4.5% by weight of a polyoxyalkylene glycol derivative represented by the following chemical formula (1):

   R₁-O-(R₂-O)ₙ-R₃ (1)

   wherein R₁ represents an alkyl group having 1 to 8 carbon atoms, R₂ represents an alkylene group having 1 to 4 carbon atoms, R₃ represents hydrogen or an alkyl group having 1 to 8 carbon atoms, and n is a number representing the degree of polymerization,
   the kinematic viscosity of the lubricating oil being 8 to 150 mm²/S at 40 °C.

The working fluid for a refrigerator according to the present invention comprises one of the above lubricating oil for a compression refrigerator and an HFC refrigerant.

Further, the present invention is directed to a method for lubricating a refrigeration system using the foregoing lubricating oil for a compression refrigerator, more specifically a method for lubricating a refrigeration system, especially a refrigeration compressor, containing residual metal working oils containing a component reactive with the polyether compound or the HFC refrigerant to produce a sparingly soluble component.

### BRIEF DESCRIPTION OF DRAWING

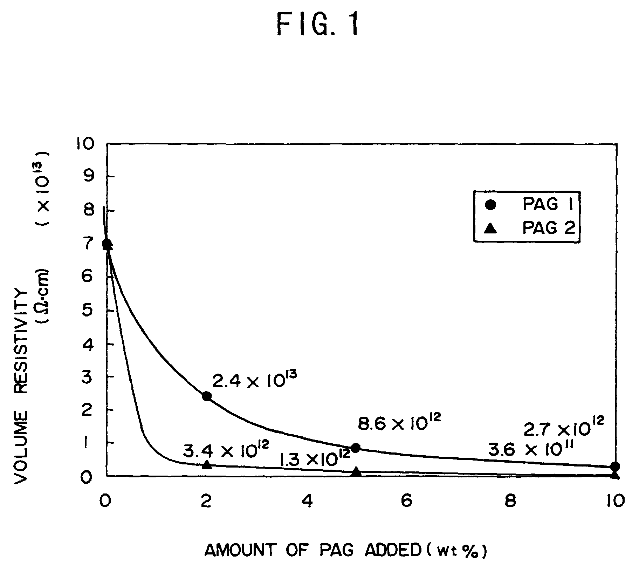

Fig. 1 is a diagram showing the results of measurement of an electrical insulating property when the amount of PAG (polyoxyalkylene compound) added to the polyether compound was varied.

### BEST MODE FOR CARRYING OUT THE INVENTION

### [Kinematic viscosity]

The kinematic viscosity at 40 °C of the lubricating oil for a compression refrigerator according to the present invention is 8 to 150 mm²/S, preferably 10 to 100 mm²/S from the viewpoint of the efficiency of the compressor and the capability of lubricating the compressor. In general, the kinematic viscosity of the refrigerator oil is 10 to 32 mm²/S at 40 °C for refrigerators, 32 to 100 mm²/S at 40 °C for room air conditioners and industrial applications, and 10 to 20 mm²/S at 100 °C for car air conditioners.

Therefore, the polyether compound and alkylaromatic compound as the lube base oil or the polyoxyalkylene compound to be used in the lubricating oil for a compression refrigerator are preferably selected from or prepared from those having a viscosity within the foregoing range, although those having a viscosity slightly outside the foregoing range may be also used, so far as they finally provide lubricating oils for compression refrigerators within the above viscosity range.

### [Polyether compound]

The polyether compound used in the present invention contains a tetrahydric or higher polyhydric alcohol residue and saturated hydrocarbon groups each containing alkyl groups having 1 to 8 carbon atoms, all the oxygen atoms in the polyhydric alcohol residue being bonded to the saturated hydrocarbon groups to form ether bonds. More specifically, the oxygen atoms in the polyhydric alcohol residue are bonded to the hydrocarbon groups each consisting of one carbon atom being bonded to two alkyl groups each having 1 to 8 carbon atoms, at the position of the carbon atom. Preferably, such a polyether compound does not have other ether bonds (such as polyoxylene groups) than the aforesaid ether bonds therein. Further, the polyether compound may have two or three ring structures and a carbon atom in one ring structure may be bonded directly to a carbon atom in other ring structure(s). However, the polyether compound preferably has a structure having only a 1,3-dioxolane ring from the viewpoint of high electrical insulating property and chemical stability. The polyether compound is preferably a cyclic compound such cyclic acetal or cyclic ketal, particularly preferably a cyclic compound having a plurality of ring structures selected from between a dioxolane ring and a dioxane ring.

The above-mentioned polyhydric alcohol residue preferably has a valence of 4 to 10, more preferably a valence of 4 to 6. When the number of ether bonds is large, the viscosity will result in too high viscosity or lower the compatibility with HFC refrigerants. Whereas the ether bonds are few, the boiling point and flashing point will unfavorably become too low. Further, the number of carbon atoms contained in the polyhydric alcohol residue is preferably 4 to 25, more preferably 4 to 20. The existence of a large number of carbon atoms in the polyhydric alcohol residue is unfavorable from the viewpoint of viscosity and compatibility, like the number of the valence set forth above. On the other hand, when the number of the carbon atoms is small, the molecular weight is also small and the boiling point and flash point will unfavorably become too low. The hydrocarbon which is constituted of one carbon being bonded to two alkyl groups, each having 1 to 8 carbon atoms, has a valence of two and the sum of the carbon atoms of the two alkyl groups is preferably 2 to 5, more preferably 2 to 3, from the viewpoint of viscosity and compatibility. A plurality of alkyl groups and hydrocarbon groups having the alkyl groups may be the same or different.

Preferable specific examples of the polyether compounds include compounds represented by the following chemical formulae (2), (3), (4), and (5): 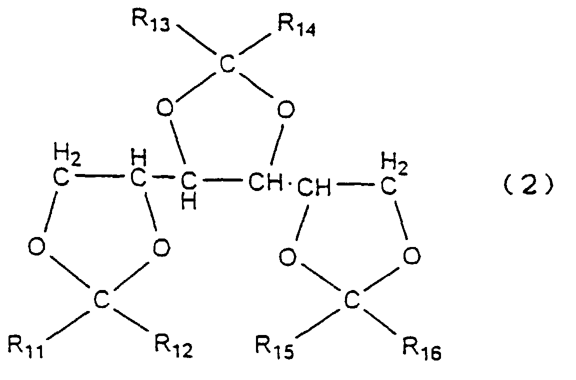 wherein R₁₁, R₁₂, R₁₃, R₁₄, R₁₅, and R₁₆, which may be the same or different, represent each an alkyl group having 1 to 8 carbon atoms; 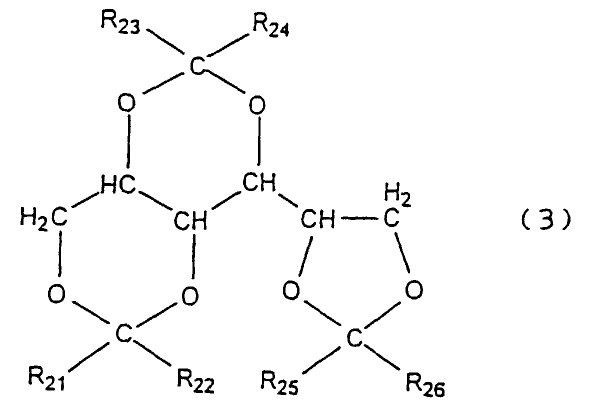 wherein R₂₁, R₂₂, R₂₃, R₂₄, R₂₅, and R₂₆, which may be the same or different, represent each an alkyl group having 1 to 8 carbon atoms; 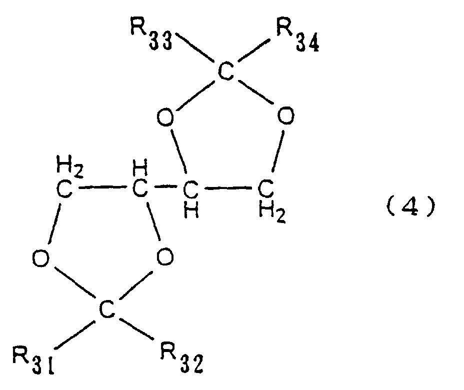 wherein R₃₁, R₃₂, R₃₃, and R₃₄, which may be the same or different, represent each an alkyl group having 1 to 8 carbon atoms; and 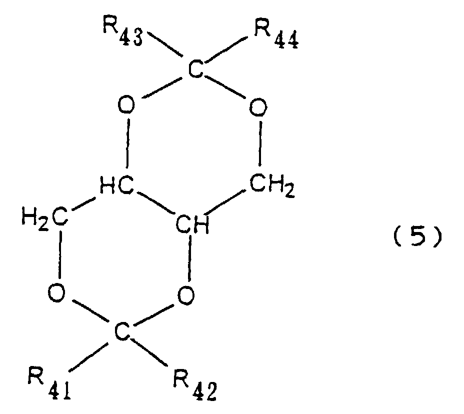 wherein R₄₁, R₄₂, R₄₃, and R₄₄, which may be the same or different, represent each an alkyl group having 1 to 8 carbon atoms.

These cyclic compounds may be prepared by a method disclosed in WO 96/06839.

Therefore, preferred examples of the polyhydric alcohols used as a starting material forming a tetrahydric or higher polyhydric alcohol residue include erythritol, ribose, pentaerythritol, sorbitol, mannitol, galactitol, iditol, talitol, allitol, polyvinyl alcohol, etc., and these compounds contain are free from unsaturated bond and ether bond. As preferable examples used as the starting materials for the hydrocarbon group which is constituted of one carbon atom being bonded to two alkyl groups each having 1 to 8 carbon atoms, there may be mentioned acetone, methyl ethyl ketone, methyl propyl ketone, diethyl ketone, methyl butyl ketone and ethyl propyl ketone, and isomers and derivatives thereof.

If unreacted hydroxyl groups remain in the polyhydric alcohol residue, the hydroxyl value will become high to thereby lower the stability. In such a case, in the last stage of the synthesis reaction, it is preferred that the remaining hydroxyl groups be capped with an alkylaldehyde having 5 to 14 carbon atoms, a monovalent alcohol having 1 to 6 caron atoms, their derivatives or the like.

### [Alkylaromatic compound]

The alkylaromatic compound used in combination with the polyether compound as the lube base oil in the present invention is preferably a branched alkylaromatic compound having a branched alkyl group having 8 to 20 carbon atoms, preferably 12 to 16 carbon atoms, as a side chain. Particularly, a so-called hard benzene (HAB) is preferable. The electrical insulating property, contaminant dissolving performance and stability are improved by using the alkylaromatic compound in combination with the polyether compound. The content of the alkylaromatic compound in the lubricating oil is preferably 5 to 45% by weight, particularly preferably 10 to 30% by weight.

Therefore, the content of the polyether compound is preferably 55 to 95% by weight, more preferably 70 to 90% by weight, based on the weight of the lube base oil. When the alkylaromatic compound content is less than 5% by weight, the lubricity, sealability, contaminant dissolving performance and the like are unsatisfactory, while when it exceeds 45% by weight, a sufficient compatibility thereof with the refrigerant will not be obtained.

### [Polyoxyalkylene compound]

The polyoxyalkylene compound used with the polyether compound in the present invention has a compound represented by the chemical formula (1):

R₁-O-(R₂-O)ₙ-R₃ (1)

In the formula, R₁ represents an alkyl group having 1 to 8 carbon atoms, and preferred examples thereof include alkyl groups having 1 to 4 carbon atoms, particularly methyl and ethyl groups. R₂ represents an alkylene group having 1 to 4 carbon atoms, and preferred examples thereof include ethylene and propylene groups. As (R₂-O), a homopolymer of oxypropylene groups or a copolymer of an oxyethylene group with an oxypropylene group is preferred. Though the copolymer may be any of a block copolymer and a random copolymer, the block copolymer is particularly preferred. The content of the oxypropylene group is preferably not less than 50%, particularly preferably not less than 70%. R₃ represents hydrogen or an alkyl group having 1 to 8 carbon atoms, particularly preferably hydrogen. That is, it is preferred that the terminal be a hydroxyl group. n is a number representing the degree of polymerization and 2 or more. n is generally selected so that the kinematic viscosity of the polyoxyalkylene compound at 40 °C is in the range of 10 to 120 mm²/S, preferably in the range of 20 to 60 mm²/S.

The amount of the polyoxyalkylene compound added is 0.5 to 4.5% by weight based on the weight of the lubricating oil. When the amount of the polyoxyalkylene compound added is insufficient, deposits attributable to additives or the like in metal working oils within the system cannot satisfactorily be dissolved. Particularly, at least 1% by weight is more preferable. On the other hand, even if the polyoxyalkylene compound is added in an amount exceeding 4.5% by weight, any further advantageous effect, which reflects such excess addition, will not be obtained in reducing the deposits. Further, excess addition will unfavorably lower the electrical insulating property. Particularly, 3.5% by weight or less is more preferable from these viewpoints.

### [Lube base oil]

The hydroxyl value of the polyether compound or the lube base oil composed of the polyether compound and the alkylaromatic compound according to the present invention is preferably not more than 5 mg KOH/g, particularly preferably not more than 2 mg KOH/g, because the piping or the like of the refrigerator system is less likely to be corroded thereby and the amount of insoluble reaction products with highly reactive additives can be minimized. Further, the total acid value is preferably not more than 0.02 mg KOH/g, particularly preferably not more than 0.01 mg KOH/g from the viewpoint of ensuring the stability against deterioration. When a motor or the like which requires electrical insulation is provided within a compressor, the volume resistivity of the lubricating oil is an important factor and it should be not less than 10¹² Ω.cm, preferably not less than 10¹³ Ω.cm.

### [Hydrofluorocarbon refrigerant]

The hydrofluorocarbon refrigerants usable in the present invention include HFC refrigerants wherein one or more hydrogen atoms in a hydrocarbon having 1 to 2 carbon atoms has been substituted with fluorine(s), such as 1,1,1,2-tetrafluoroethane (R134a), pentafluoroethane (R125), difluoromethane (R32), 1,1,1-trifluoroethane (R143a), and 1,1-difluoroethane (R152a). Mixed refrigerants, such as R407C and R410A, may also be used. The refrigerant is preferably a hydrofluorocarbon refrigerant free from chlorine. However, it is also possible to use chlorofluorocarbon (CFC), hydrochlorofluorocarbon (HCFC), ammonia refrigerant, hydrocarbon refrigerant and the like.

### [Working fluid for refrigerator]

The working fluid for a refrigerator according to the present invention comprises a mixture of the above lubricating oil with a refrigerant. The mixing weight ratio of the refrigerator oil to the refrigerant is generally preferably (10 : 90) to (90 : 10), particularly preferably (20 : 80) to (80 : 20).

### [Additives]

The lubricating oil according to the present invention may optionally contain conventional additives including: anti-wear agents, for example, phosphate compounds such as triaryl phosphates and trialkyl phosphates; metal deactivators such as benzotriazole derivatives and alkenylsuccinic esters; antioxidants, for example, phenolic antioxidants such as DBPC (2,6-ditert-butyl-p-cresol), and amine antioxidants such as p,p'-dioctyldiphenylamine; and stabilizers for HFC refrigerants, for example, epoxy compounds such as 2-ethylhexyl glycidyl ether, sec-butylphenyl glycidyl ether, and a monoglycidyl ether having an acyl group having 5 to 10 carbon atoms. Each additive may be added in an amount of 0.05 to 5.0% by weight.

### Examples

The present invention will be described in more detail with reference to the following Examples, though it is not limited to these Examples only. In the following Examples and Comparative Examples, sample oils were prepared for tests and evaluated.

Using the following base stocks, sample oils were prepared according to the formulations (% by weight) specified in Table 1. First evaluation was made for each sample lubricating oil for a compression refrigerator using a lube base oil composed of a polyether compound and a branched alkylaromatic compound.

**[Table 1]**

| | Sample oil 1 | Sample oil 2 | Sample oil 3 | Sample oil 4 | Sample oil 5 | Sample oil 6 |
|---|---|---|---|---|---|---|
| Cyclic ether | 70 | 95 | 98 | 40 | 70 | - |
| PAG | - | - | - | - | - | 70 |
| HAB | 30 | 15 | 2 | 60 | - | 30 |
| SAB | - | - | - | - | 30 | - |

Polyether compound (cyclic ether): it was a compound having a chemical structure represented by the general chemical formula (2), wherein R₁₁, R₁₃, and R₁₅ represent each a methyl group, and R₁₂, R₁₄, and R₁₆ represent each an ethyl group. This was used as the lube base oil and had a kinematic viscosity of 4.45 mm²/S at 100°C and 64 mm²/S at 40 °C.

HAB (branched alkylbenzene): it was an alkylbenzene having a branched alkyl group with 12 to 16 carbon atoms and had a kinematic viscosity of 45 mm²/S at 40 °C.

SAB (straight-chained alkylbenzene): it was an alkylbenzene having a straight-chained alkyl group and had a kinematic viscosity of 25 mm²/S at 40 °C.

PAG 1: it was a polyoxyalkylene glycol having a structure represented by CH₃-O-(PO)ₘ(EO)ₙ-H, wherein PO represents an oxypropylene group, EO represents an oxyethylene group, and m and n represent each the degree of polymerization with m : n = 8 : 2. This compound had a kinematic viscosity of 58 mm²/S at 40 °C.

The results of evaluation of the sample oils are summarized in Table 2.

**[Table 2]**

| | | Sample oil 1 | Sample oil 2 | Sample oil 3 | Sample oil 4 | Sample oil 5 | Sample oil 6 |
|---|---|---|---|---|---|---|---|
| Kinematic viscosity at 40 °C [mm²/S] | | 57 | 60 | 64 | 51 | 44 | 55 |
| Wear [µm] | Roller | 0.84 | 1.51 | 5.67 | 0.42 | 0.61 | 1.67 |
| | Vane | 0.79 | 1.41 | 5.16 | 0.47 | 0.58 | 1.70 |
| Residual contaminant | | 0 | 1 | 2 | 0 | 0 | 0 |
| Total acid value [mg KOH/g] | | 0.01 | 0.01 | <0.01 | 0.02 | 0.06 | 0.01 |
| Saturated water absorption [%] | | 0.20 | 0.23 | 0.26 | 0.13 | 0.20 | 1.47 |
| Volume resistivity [Ω.cm] | | 1x10¹⁴ | 8x10¹³ | 5x10¹³ | 3x10¹⁴ | 1x10¹⁴ | 3x10¹¹ |

The sample oils were evaluated by the following methods.

### [Wear]

A working fluid prepared by mixing 400 ml of each sample oil with 590 g of an HFC refrigerant (R407C) was filled into a compressor (a rotary refrigeration compressor) for a domestic refrigerator. After operation for an endurance test under the following conditions, the compressor was disassembled, and the wear of each of the roller and the vane section was measured. R407C as the HFC refrigerant used was a mixture of R32, R125, and R134a in a weight ratio of 23 : 25 : 52. The contamination in the interior of the refrigeration system attributable to the deposition of the working oils was evaluated using an actual machine. The following refrigeration system for a refrigerator was used for the evaluation. A mixture of the refrigerant with the lubricating oil was compressed by means of a compressor, cooled in a condenser to prepare a liquefied mixture. Thereafter, the liquid was lead through a capillary (having an inner diameter of 0.6 mm and a length of 1 m and made of copper) to an evaporator where the pressure was reduced for vaporization, thereby conducting heat exchange through the evaporator. The vaporized refrigerant and the refrigerator oil were returned to the compressor.
Pressure on discharge side: 27 kg/cm²G
Pressure on intake side: 5 kg/cm²G
Discharge gas temperature: 110 °C
Operation time: 600 hr (continuous operation)
Frequency: 60 Hz

### [Accumulation of contaminants]

65 g of an R407C refrigerant, 250 ml of the sample oil, and 2% by weight, based on the sample oil, of a mixture of a plurality of metal working oils for use in production of refrigerators were filled into a 200-W refrigerant compressor for a refrigerator, and the compressor was operated at a vaporization temperature of -20 to -25 °C for 200 hr. Thereafter, the amount of the deposits produced within the capillary tube was evaluated by observation. The sample oil was graded as 5 when a thick deposit was created on the whole surface. The grade was lowered with lowering in the amount of the deposits, and the sample oil was graded as zero (0) when no deposit was observed. Grades 1 to 4 are as follows:
Grade 1: Dot-like deposits scattered.
Grade 2: Some of the dot-like deposits joined each other.
Grade 3: Almost all the dot-like deposits joined each other.
Grade 4: The entire surface of the capillary was covered with a thin layer of deposits.

### [Total acid value]

In accordance with JIS C210, the total acid value was measured for each lubricating oil after conducting the endurance test for measuring the wear.

### [Saturated water absorption]

The sample oil was allowed to stand in a thermohygrostat kept at a temperature of 30 °C and a humidity of 80% for 3 days, and the water content was then determined by Karl Fischer method.

### [Volume resistivity]

It was measured at 25 °C according to JIS C 2101.

Next, each sample oil for a compression refrigerator prepared by compounding with a PAG compound into a cyclic polyether lube base oil was evaluated.

The lube base oil used was a polyether compound having the above chemical structure represented by the general formula (2) and the following polyoxyalkylene compounds PAGs 1 to 4 were added in respective proportions specified in Table 3 to the base oil, except for one sample oil, thereby preparing sample oils 1 to 6.

PAG 1 was the same as described above.

PAG 2 was a compound having a structure represented by C₄H₉-O-(PO)ₘ(EO)ₙ-H, wherein PO represents an oxypropylene group, EO represents an oxyethylene group, and m and n represent each the degree of polymerization with m : n = 5 : 5. This compound had a kinematic viscosity of 20 mm²/S at 40 °C.

PAG 3 was a compound having a structure represented by CH₃-O-(PO)ₘ(EO)ₙ-CH₃, wherein PO represents an oxypropylene group, EO represents an oxyethylene group, m and n represent each the degree of polymerization with m : n = 8 : 2. This compound had a kinematic viscosity of 47 mm²/S at 40 °C.

PAG 4 was a compound having a structure represented by CH₃-O-(BO)ₘ(PO)ₙ-CH₃, wherein BO represents an oxybutylene group, PO represents an oxypropylene group, and m and n represent each the degree of polymerization with m : n = 5 : 5. This compound had a kinematic viscosity of 57 mm²/S at 40 °C.

Evaluation was made for the contamination of each sample in the same way as in the case of "accumulation of contaminants" hereinbefore described and the mount of the deposits in the interior of the capillary tube was examined by observation. The results are summarized in Table 3.

**[Table 3]**

| | Sample oil 7 | Sample oil 8 | Sample oil 9 | Sample oil 10 | Sample oil 11 | Sample oil 12 |
|---|---|---|---|---|---|---|
| Additive | PAG 1 | PAG 1 | PAG 2 | PAG 3 | PAG 4 | none |
| Amount added (wt%) | 4 | 2 | 2 | 4 | 4 | none |
| Grade on deposition | 0 | 0 | 0 | 1 | 1 | 5 |

The electrical insulating properties which varied with the amount of PAG 1 or 2 added to the base oil were evaluated, and the results are shown in Fig. 1. As can be seen from Fig. 1, electrical insulating property for practical use could be provided by the addition in an amount of not more than 4.5% by weight, although the insulating properties were reduced by addition exceeding 3.5% by weight.

### INDUSTRIAL APPLICABILITY

The present invention is directed to a lubricating oil for a compression refrigerator which comprises, as a lube base oil, a polyether compound containing a tetrahydric or higher polyhydric alcohol residue and a plurality of saturated hydrocarbon groups having 1 to 8 carbon atoms, all the oxygen atoms in the polyhydric alcohol residue being bonded to the saturated hydrocarbon groups to form ether bonds and an alkylaromatic compound having a branched alkyl group having 8 to 20 carbon atoms, and, another a lubricating oil for a compression refrigerator comprising, in addition to the above-mentioned polyether, a predetermined amount of a particular polyoxyalkylene compound. According to the present invention, a lubricating oil for a refrigerator can be provided which has satisfactory lubricity, excellent contaminant dissolving performance, low hygroscopicity, and excellent electrical characteristics, without lowering the efficiency of a refrigeration system. The lubricating oil of the present invention is particularly suitable for use in a refrigeration system using an HFC refrigerant or the like.

## Claims

1. A lubricating oil for a compression refrigerator, which comprises a lube base oil comprising:
(a) a polyether compound containing a tetrahydric or higher polyhydric alcohol residue and a plurality of hydrocarbon groups each consisting of a carbon atom having two alkyls, all the oxygen atoms in the polyhydric alcohol residue being bonded to the hydrocarbon groups to form ether bonds at the position of the carbon atom, wherein said alkyl groups each has 1 to 8 carbon atoms and said plurality of alkyl groups and said plurality of hydrocarbon groups may be respectively the same or different; and
(b) an alkylaromatic compound having a branched alkyl group having 8 to 20 carbon atoms, the kinematic viscosity of the lubricating oil being 8 to 150 mm²/S at 40 °C.

2. A lubricating oil for a compression refrigerator, comprising:
(a) a polyether compound containing a tetrahydric or higher polyhydric alcohol residue and a plurality of hydrocarbon groups each consisting of a carbon atom having two alkyls, all the oxygen atoms in the polyhydric alcohol residue being bonded to the hydrocarbon groups to form ether bonds at the position of the carbon atom, wherein said alkyl groups each has 1 to 8 carbon atoms and said plurality of alkyl groups and said plurality of hydrocarbon groups may be respectively the same or different; and
(c) 0.5 to 4.5% by weight of a polyoxyalkylene compound represented by the general formula,
R₁-O(-R₂-O)ₙ-R₃
wherein R₁ represents an alkyl group having 1 to 8 carbon atoms, R₂ represents an alkylene group having 1 to 4 carbon atoms, R₃ represents hydrogen or an alkyl group having 1 to 8 carbon atoms, and n is a number representing the degree of polymerization,
the kinematic viscosity of the lubricating oil being 8 to 150 mm²/S at 40 °C.

3. The lubricating oil for a compression refrigerator according to claim 1 or 2, wherein the polyether compound is a cyclic compound having a plurality of ring structures selected between a dioxolane ring and a dioxane ring.

4. A working fluid for a refrigerator comprising: the lubricating oil for a compression refrigerator according to any one of claims 1 to 3; and a hydrofluorocarbon refrigerant.

5. A method for lubricating a refrigeration system containing a refrigerator compressor compressing said hydrofluorocarbon refrigerant, wherein the lubricating oil for a compression refrigerator according to any one of claims 1 to 3 is used.
